Europäisches Patentamt

European Patent Office

Office européen des brevets

(19)

(11) Veröffentlichungsnummer: **0 269 762**
**B1**

(12) **EUROPÄISCHE PATENTSCHRIFT**

(45) Veröffentlichungstag der Patentschrift: **25.04.90**

(51) Int. Cl.⁵: **F 16 L 23/00, F 16 K 5/06**

(21) Anmeldenummer: **86116793.0**

(22) Anmeldetag: **03.12.86**

(54) Abdichtung für eine Dichtungsarmatur.

(43) Veröffentlichungstag der Anmeldung:
**08.06.88 Patentblatt 88/23**

(45) Bekanntmachung des Hinweises auf die
Patenterteilung: **25.04.90 Patentblatt 90/17**

(84) Benannte Vertragsstaaten:
**AT BE CH DE ES FR GB GR IT LI LU NL SE**

(56) Entgegenhaltungen:
**DE-A-3 023 230**
**DE-B-1 288 392**
**DE-C- 144 668**

(73) Patentinhaber: **Naegelen S.A.**
**8 Rue de L'III B-P. 29 Brunstatt**
**F-68200 Mulhouse (FR)**

(72) Erfinder: **Gonsior, Wolfgang, Dipl.-Ing. FH**
**Im Obstgarten 10**
**D-8990 Lindau-Bodolz (DE)**

(74) Vertreter: **Riebling, Peter, Dr.-Ing., Patentanwalt**
**Rennerle 10, Postfach 31 60**
**D-8990 Lindau/B. (DE)**

EP 0 269 762 B1

Courier Press, Leamington Spa, England.

**Beschreibung**

Die Erfindung betrifft eine Dichtungsarmatur für eine Rohrverbindung mit zwei Rohrstücken mit Außenflanschen nach dem Oberbegriff des Patentanspruchs 1.

Eine solche Abdichtung ist bekannt. Hierbei können sich Probleme ergeben, wenn die Verbindungsschrauben zu stark angezogen werden, nämlich um eine besonders gute Dichtverbindung herzustellen. In diesem Fall wird nämlich die Fortsetzung der Ringdichtung zum Inneren der eigentlichen Dichtungsarmatur ebenfalls verschoben, was dort zu Problemen führen kann, insbesondere zu einer nicht gewünschten Schwergängigkeit eines Betätigungsgliedes für die Armatur, mit dem beispielsweise eine Durchgangsöffnung geöffnet bzw. verschlossen wird.

Bei einer bekannten Dichtungsarmatur mit einer Abdichtung sind die oben angegebenen Probleme hinsichtlich der Abdichtung aus der DE—C—144 668 bekannt, wobei ersichtlich ist, daß bei dieser bekannten Dichtungsarmatur beim versehentlichen zu starken Anziehen der Verbindungsschrauben die Ringdichtung über die Hebelarmwirkung der Außenflansche leicht gequetscht werden kann, ohne daß dieses durch die dort angegebenen Andrückschrauben f verhindert werden könnte.

Der Erfindung liegt daher die Aufgabe zugrunde, eine bekannte Dichtungsarmatur so auszugestalten, daß eine zwischen den Rohrstücken angeordnete Dichtung nach erreichen der Dichtwirkung nicht weiter verformt oder verschoben werden kann, auch wenn die Verbindungsschrauben der Rohrverbindung versehentlich etwa überdreht werden.

Zur Lösung dieser Aufgabe sind gemäß der Erfindung die Merkmale des kennzeichnenden Teils des Patentanspruchs in Verbindung mit dem Oberbegriff vorgesehen.

Durch diese Andrückschrauben wird somit der Ringspalt zwischen den Innenflächen der beiden Ringflansche derart eingestellt, daß einerseits eine gute Dichtwirkung, bedingt durch ein entsprechendes Anziehen der Verbindungsschrauben, erhalten bleibt und andererseits die Dichtung doch nicht so stark komprimiert wird, daß die Fortführung der Dichtung zu den anderen Betriebsteilen der Armatur darunter sich verschieben oder verformen könnte.

Die Erfindung wird im folgenden anhand eines Ausführungsbeispiels näher erläutert, aus dem sich weitere wichtige Merkmale ergeben. Es zeigt:

Fig. 1 eine Draufsicht auf eine Dichtungsarmatur nach der Erfindung;

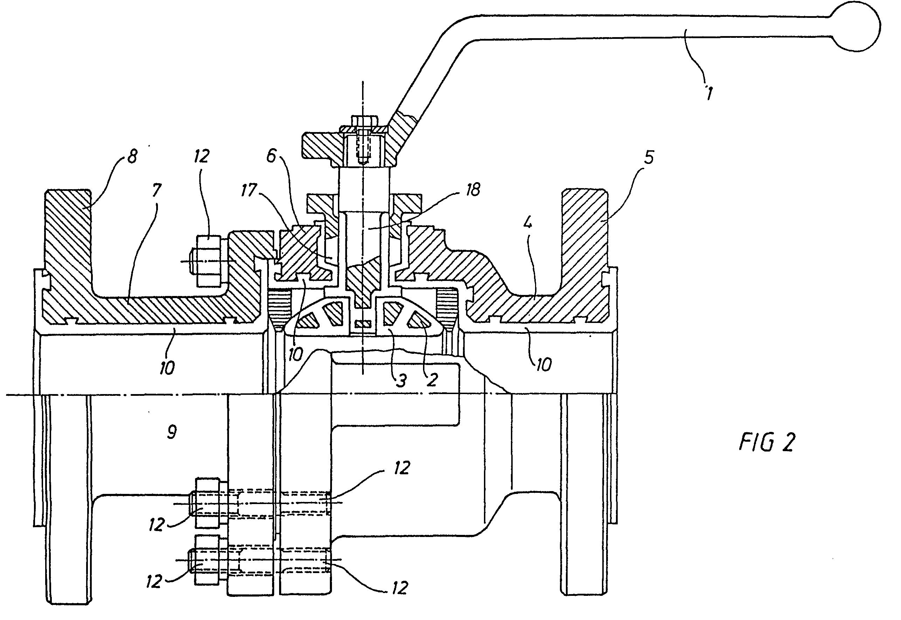

Fig. 2 einen Schnitt längs der Linie A—A von Fig. 1;

Fig. 3 einen Schnitt längs der Linie B—B von Fig. 1;

Fig. 4 einen vergrößerten Axialschnitt durch die aneinander anliegenden Ringflansche der Abdichtung mit weiteren Bauteilen.

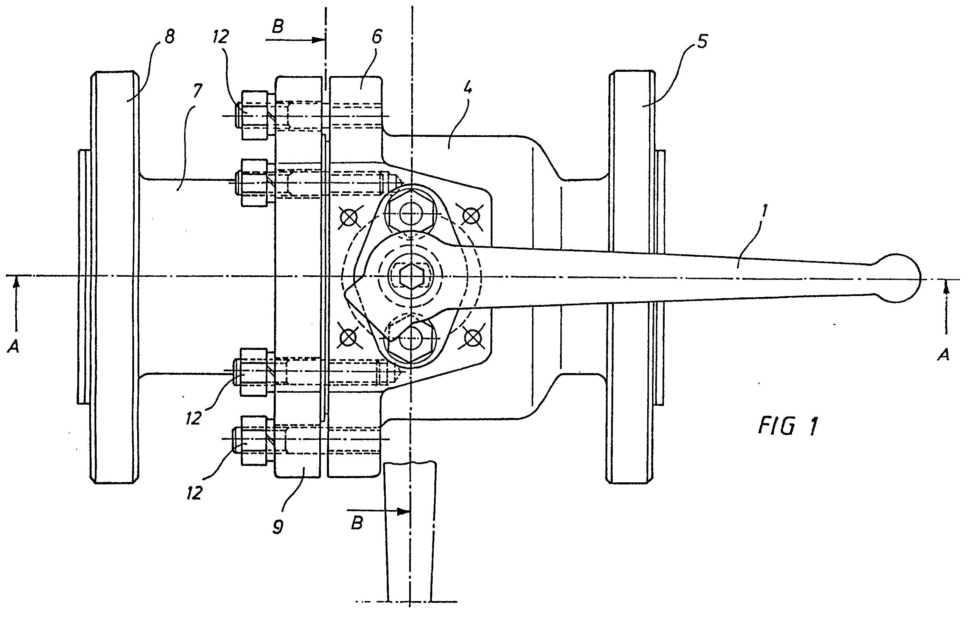

Zeichnerisch ist ein sogenannter Kugelhahn gezeigt, der in einer Durchflußverbindung angeordnet ist. Der Hahn wird über einen Hebel 1 von Hand betätigt. Fig. 1 zeigt die geöffnete Stellung des Kugelhahns. Drehfest mit dem Hebel 1 ist eine Kugel 2 verbunden, die mit einem elastischen Dichtmaterial, beispielsweise Polytetrafluoräthylen (PTF) ausgekleidet ist. Die Auskleidung ist bei Position 3 angedeutet. Der Kugelhahn ist Teil eine Dichtungsarmatur mit einem Gehäuse 4.

Das Gehäuse hat an seinen beiden Enden Ringflansche 5, 6. Zeichnerisch ist dargestellt, daß der Kugelhahn mit einem Rohrstück 7 dichtend verbunden werden soll, das an seinen Enden ebenfalls Ringflansche 8, 9 hat. Auch das Rohrstück mit seinen Ringflanschen ist mit einer Auskleidung 10 aus PTF versehen. Es sei erwähnt, daß die Auskleidungen auch aus anderem, geeignetem Material bestehen können.

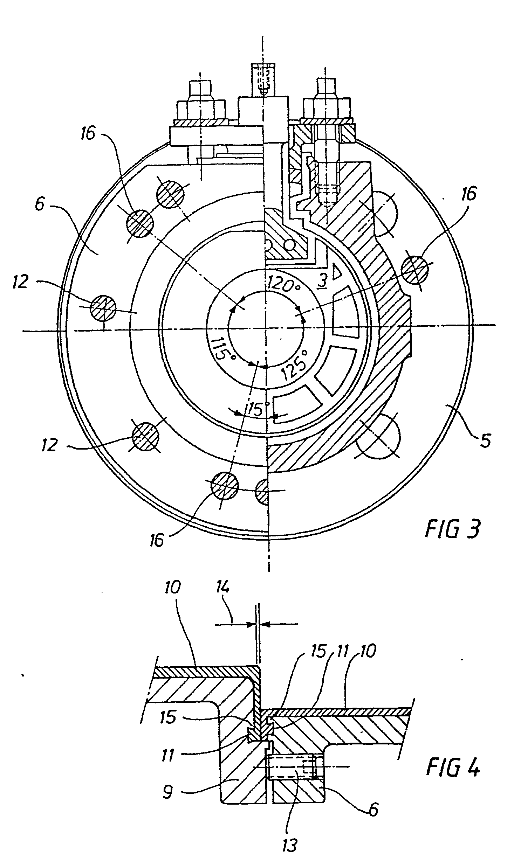

Auch das Innere des Gehäuses 4 des eigentlichen Kugelhahns ist mit dieser Auskleidung versehen, die im übrigen über trapezförmige Verbreiterungen an der Innenseite in entsprechenden Ausnehmungen am Gehäuse bzw. am Rohrstück verankert ist. Die trapezförmigen Verbreiterungen sind am besten in Fig. 4 unter Pos. 11 gezeigt.

Die beiden Rohrstücke 4, 7 sind mit Hilfe ihrer Ringflansche 6, 9 und mit Hilfe von Verbindungsschrauben 12 miteinander verbunden, die über den Umfang der Flansche verteilt in diese eingeschraubt sind.

Erfindungsgemäß sind in einen der Flansche, beim Ausführungsbeispiel ist dies der Flansch 6, über den Umfang de Flansche verteilt mehrere Andrückschrauben 13 eingeschraubt, die von außen betätigt werden können. Die flachen Spitzen der Andrückschrauben stützen sich an der gegenüber liegenden Fläche des anderen Flansches 9 ab und beabstanden dach die beiden Ringflansche um ein vorbestimmtes Maß voneinander. Dieser Abstand ist in Fig. 4 bei Pos. 14 angedeutet. Es sei erwähnt, daß beide Dichtungen 10 dort zu Ringstücken 15 verlängert sind, die also die erwähnte Ringdichtung ausbilden. Beide Ringstücke oder Ringdichtungen 15 liegen also aneinander an. Die Andrückschrauben liegen dagegen an einem weiter außen liegenden Teil des Ringflansches 9 an, so daß die Ringdichtung durch die Andrückschrauben nicht beschädigt werden kann.

Fig. 3 zeigt, daß insgesamt drei der Andrückschrauben 13 vorgesehen sind, deren Gewindebohrungen bei Pos. 16 angedeutet sind.

Dadurch, daß über eine entsprechende Einstellung der Andrückschrauben 13 der Spalt 14 der genau eingestellt werden kann, wird erreicht, daß auch bei einem sehr starken Anziehen der Verbindungsschrauben 12 die Auskleidungen 10 nicht merklich verformt oder verschoben werden können. Beim Stand der Technik, bei dem keine Andrückschrauben vorgesehen waren, konnte es dagegen vorkommen, daß bei einem zu starken Anziehen der Verbindungsschrauben, um eine gute Abdichtung zu gewährleisten, die Ringdichtungen 15 so stark verformt wurden, daß die daran anschließenden Teile 10 der Dichtungsmaterialien die Betätigung des Kükens schwergängig machten. Dies erfolgte durch einen erhöhten Preßdruck auf eine Packung 17 und/oder dadurch, daß auch die Auskleidung der Kugel 2 bzw. ihrer Welle 18 unzulässig hoch hierdurch gepreßt wurde.

## Patentanspruch

Dichtungsarmatur für eine Rohrverbindung mit zwei Rohrstücken mit Außenflanschen, die über in die Flansche eingeschraubte auf einem Lochkreis angeordnete Verbindungsschrauben miteinander verbindbar sind, wobei zwischen den beiden aneinander liegenden Flanschen eine Ringdichtung vorgesehen ist und die Ringdichtung als Innenauskleidung in wenigstens einem der Rohrstücke fortgesetzt und zu weiteren Betriebsteilen der Armature geführt ist, und weiterhin am Flansch am Umfang verteilt Andrückschrauben vorgesehen sind und die Andrückschrauben (13) in einen der Flansche (6, 9) eingeschraubt sind, deren Enden sich an den anderen Flanschen (6, 9) anlegen, dadurch gekennzeichnet, daß die Andrückschrauben (13) von der Ringdichtung ausgehend radial nach außen Löchstens auf demselben Lochkreis wie die Verbindungsschrauben (12) angeordnet sind.

## Revendication

Elément de robinetterie à joint d'étanchéité pour un raccord de tuyauterie comportant deux tronçons de tuyau munis de brides extérieures et aptes à être raccordés entre eux par des vis de jonction vissées dans les brides et logées dans des trous disposés en cercle, un joint d'étanchéité annulaire étant prévu entre les deux brides juxtaposées, joint d'étanchéité annulaire qui se prolonge dans l'un au moins des tonçons de tuyau sous la forme d'un revêtement intérieur et s'étend à d'autres pièces actives de l'élément de robinetterie, tandis que des vis de pression sont également prévues, réparties à la périphérie de la bride, vis de pression (13) qui sont vissées dans l'une des brides (6, 9) et dont les extrémités s'appuient contre l'autre bride (6, 9), caractérisée en ce que les vis de pression (13) sont disposées, radialement vers l'extérieur a partir du joint annulaire, tout au plus sur le même cercle de trous que les vis de jonction (12).

## Claim

A sealing fitting for a pipe coupling comprising two pipe elements with external flanges which can be joined to one another via coupling bolts screwed into the flanges and arranged along a circle of holes, wherein an annular seal is provided between the two mutually abutting flanges and the annular seal is continued as an internal lining into at least one of the pipe elements and led to other operating parts of the fitting, and furthermore contact pressure screws are provided on the flange, distributed around the periphery, and the contact pressure screws (13) are screwed into one of the flanges (6, 9), their ends bearing against the other flange (6, 9) characterized in that the contact pressure screws (13) are arranged no further outwards radially from the annular seal than the same circle of holes as the coupling bolts (12).

FIG 1

EP 0 269 762 B1

FIG 2

FIG 3

FIG 4